# EUROPEAN PATENT APPLICATION

(11) **EP 4 501 882 A1**
(43) Date of publication of application: **05.02.2025**
(21) Application number: 23189067.4
(22) Date of filing: 01.08.2023
(51) Int. Cl.: C04B 28/04, C04B 28/14, C04B 28/16

(54) **BACKFILL MATERIAL**

(71) Applicant: Construction Research & Technology GmbH, 83308 Trostberg (DE)
(72) Inventor: DHERS, Sebastien, 83308 Trostberg (DE); FREIMUT, Dominik, 83308 Trostberg (DE); MARTIC, Zlatko, 5113 Holderbank (CH); AYKAN, Gulnihal, 37127 Dubai (AE); GOWDA, Sridhara, 37127 Dubai (AE); MORATTI, Francesca, 31100 Treviso (IT); NEGRO, Alessio, 31100 Treviso (IT)
(74) Representative: Meissner Bolte Partnerschaft mbB

(57) **Abstract**

A backfill material useful in mining and tunneling applications comprises a) tailings, b) a binder component, c) water, and d) a dispersant comprising a phosphorylated polycondensate being obtainable by a condensation reaction of (i) an aromatic compound having a phosphate moiety, (ii) an alkoxylated hydroxyaryl compound having a polyoxyalkylene chain with 3 to 130 oxyalkylene units, and (iii) formaldehyde, in a weight ratio of (i) : (ii) of 2 : 98 to 40 : 60. The backfill material, besides a well-defined yield point, maintains a high Unconfined Compressive Strength in the long term so that the strength of the formed backfill is not compromised.

## Description

The invention relates to a backfill material useful in a variety of mining and tunneling applications.

A backfill material is used to fill excavations in mining, as in "cut and fill" mining, in general steep dipping ore bodies or in wide horizontal bodies where the fill is used as the means of creating a floor and a sidewall pillar support. For example, an elongated excavation extending longitudinally along the strike of the ore body is driven upwardly or downwardly following the deposit. To provide support for the hanging wall, pillars are left in place. Later the space between adjacent pillars may be filled by a backfill to support the roof so allowing the pillars to be removed for the ore therein to be extracted.

Mined-out portions of stopes are often backfilled with an aqueous slurry of tailings from the crushing and processing of mineral ore, pumped into the stope. The tailings may be for example reduction works tailings, mill tailing sands, and coal dust tailings. The tailings are usually made of fine particles of less than 150 µm, the majority below 75 µm.

Usually, the slurry is pumped for a distance of several kilometers from where the slurry is prepared. In order to make the slurry pumpable it is necessary to add a high proportion of water and/or a plasticizer to exert a plasticizing effect on the solids of the slurry.

It has been proposed to add ordinary Portland Cement to the slurry in order to improve resistance of the backfill to compression and offer improved strength.

WO 2022/117528 A1 relates to a process for the production of backfilling pastes for underground operations, said process comprising or essentially consisting of the mixing of a) cement, b) tailings from underground operations, c) optionally extra water, d) at least one polycarboxylate ether, and e) calcium hydroxide. The invention also relates to a method for controlling the flow of a backfilling paste for underground operations.

One problem associated with backfill mixtures known from the prior art is a long term deterioration of Unconfined Compressive Strength (UCS). The drop in Unconfined Compressive Strength is for reasons that are not yet fully understood but may be due to late ettringite formation caused by a high sulfate content of some types of tailings resulting in a deterioration in the microstructure of the formed backfill. In order to compensate for said UCS drop, e.g., higher dosages of cement are to be used to ensure that the long term UCS satisfies the minimum requirement. This in turn is disadvantageous with regard to more environmentally compatible backfilling operations and makes the process more expensive.

It is an object of the invention to provide a backfill material which, besides a well-defined yield point, maintains a high Unconfined Compressive Strength in the long term so that the strength of the formed backfill is not compromised.

The above problem is solved by a backfill material comprising
a. tailings,
b. a binder component,
c. water, and
d. a dispersant comprising a phosphorylated polycondensate being obtainable by a condensation reaction of
   (i) an aromatic compound having a phosphate moiety,
   (ii) an alkoxylated hydroxyaryl compound having a polyoxyalkylene chain with 3 to 130 oxyalkylene units, and
   (iii) formaldehyde,
   in a weight ratio of (i) : (ii) of 2 : 98 to 40 : 60, preferably 5 : 95 to 30 : 70, more preferably 10 : 90 to 20 : 80.

The term backfilling material refers to a reinforcing material useful in underground operations to fill any voids, which has a flowable or pumpable consistency under standard conditions. Voids may originate from the excavation process in underground operations or they may occur naturally, for example as caves. The backfilling material is a settable material, which hardens with time to form a solid material providing resistance to compression. Especially, the hardening of backfilling material occurs via a hydration mechanism of the binder component.

The backfill material is transported through pipelines to underground voids, where the backfill material gradually solidifies and develops strength. The hardened backfill provides support to the nearby rocks, reduces surface subsidence, and improves ore recovery. The fluidity plays a crucial role for backfilling as the backfill material needs to be pumpable to be transported to the target space as mentioned before.

The backfill material is generally considered adequate for use in subterranean operations and sufficiently pumpable when it exhibits a yield point ("YP") of 1000 Pa or lower, preferably 900 Pa, more preferred 800 Pa, as measured by constant shear rate method (at 0.5 RPM) using a HAAKE viscotester iQ rheometer and measuring geometry with VANE (FL100). The yield point of a backfill material can be used to gain information about the fluidity of a backfill material. The yield point is the lowest shear-stress value above which a material will behave like a fluid, and below which the material will act like a solid. It is often seen at start-up of rakes, mixers and pumps, when a higher than usual energy is required to begin rotation. This peak in energy required is due to the yield point, which causes the material to display solid-like properties until the yield point has been exceeded. Once the yield point has been overcome, the material behaves like a liquid and will start to flow.

The backfill material can be in form of a slurry or in form of a paste. A slurry is intended to mean any flowable suspension of fine particles in a liquid with an excess of liquid that can segregate as a supernatant. A paste is intended to mean a homogenous mixture of fine particles and liquid that is substantially stable against segregation and bleeding.

Tailings within the present context are the by-product of mining operations after extraction of the valuable materials from the ore in a processing plant or mill using beneficiation techniques such as flotation.

Fine grinding of the ore, e.g. copper, gold, zinc/lead, nickel, platinum group metals, etc., is required to liberate the values from the containing gangue, to selectively float the values in a froth flotation cell. Consequently, all the gangue materials associated with the valuable mineral are comminuted to a similar size. The resultant tailings may be stored as a thickened slurry or paste in a purpose built tailings storage facility. Ponds can be used for long term storage, as a place to allow the different components of the tailings to settle out of suspension, or for temporary holding until the tailings can be further processed. When the mine tailings source includes a settling pond, a dredging device may be utilized to remove mine tailings from the settling pond as dredged mine tailings, which also may be referred to as mature fine tailings, and the mine tailings supplied to the mixing volume may include the dredged mine tailings.

Tailings can vary in chemical composition and physical appearance in a wide range. Generally, the chemical composition will largely depend on the location and chemical composition of the deposit from where the tailings were extracted. Furthermore, the chemical composition may also be influenced by the extraction methods as well as subsequent storage time and conditions. The physical appearance, including particle size and shape, typically also depends on the mechanical treatment of the ore and the tailings. The tailings can either be used directly after extraction of the valuable materials from the ore for use in the backfill material or they can be stored in tailings ponds that serve as temporary storage facilities for tailings.

Mostly, the tailings are a mix of silt (< 75 µm), fine sand (75 to 150 µm), and coarse sand (> 150 µm). The tailings are usually made of fine particles, at least 90 wt.-% of which having a particle size of less than 400 µm, preferably less than 150 µm, and at least 50 wt.-% having a particle size below 150 µm, preferably below 75 µm.

Tailings from underground operations can contain quartz and phyllosilicates. Other minerals such as, for example, magnetite and gypsum may additionally be present. It is, however, preferable that the amount of gypsum in such tailings is low. A low amount is an amount of less than 5 wt.-%, preferably less than 2 wt-%, more preferably less than 1 wt.-% relative to the total dry weight of the tailings. The phyllosilicates are layered silicate minerals and, more specific, phyllosilicate minerals based on tetrahedral MO₄ sheets (M = Si⁴⁺, Al³⁺) and octahedral M(O,OH)₆ sheets (M = Al³⁺, Mg²⁺, Fe^{2+/3+}, etc.). They differ inter alia from each other by their way of stacking the tetrahedral and octahedral sheets, which strongly influences their capacity of adding or losing water molecules or cations from their structure. Phyllosilicates are chosen from the list consisting of the minerals of the smectite group (such as montmorillonite, nontronite, beidellite, saponite, hectorite and sauconit), vermiculites, kaolinite, serpentines (such as serpentine and lizardite), palygorskite, sepiolite, talc, pyrophyllite, chlorites, mica (such as muscovite or biotite), interlayer-deficient mica like illite, glauconite, celadonite, and phengite.

The backfill material of the present invention incorporates the use of a binder component. Any hydraulic binder which hardens in contact with water may be used as binder component. Materials with latent hydraulic or pozzolanic activity can be used as a partial replacement of the hydraulic binder.

Preferably, the binder component comprises a Portland cement clinker-based binder, in particular ordinary Portland cement (OPC)..

In one embodiment, the weight ratio of the binder component to the tailings is from 1 to 20, preferably 1.5 to 15, more preferably 2 to 10.

The term "Portland cement" denotes any cement compound containing Portland clinker, especially CEM I within the meaning of standard EN 197-1, paragraph 5.2. A preferred cement is ordinary Portland cement (OPC) according to DIN EN 197-1. The phases constituting Portland cement mainly are alite (C3S), belite (C2S), calcium aluminate (C3A), calcium ferroaluminate (C4AF) and other minor phases. Commercially available OPC may either contain calcium sulfate (< 7 wt.-%) or is essentially free of calcium sulfate (< 1 wt.-%).

The Portland cement clinker may be present in an amount of at least 5 wt.-%, preferably 10 to 90 wt.-%, more preferably 15 to 65 wt.-%, relative to the weight of the binder component.

Portland cement is made primarily from certain clay minerals, limestone and gypsum, in a high temperature process that drives off carbon dioxide and chemically combines the primary ingredients into new compounds. Because carbon dioxide is generated by both the cement production process itself, as well as by energy plants that generate power to run the production process, cement production is currently a leading source of current carbon dioxide atmospheric emissions.

Therefore, it is generally desirable to provide a backfill material with reduced carbon footprint without compromising critical properties.

In one embodiment, the binder component additionally comprises a supplementary cementitious material, wherein the supplementary cementitious material is preferably selected from calcined clay, slag, fly ash, natural pozzolans, and combinations thereof. The use of additional supplementary cementitious materials as a partial substitute of Portland cement allows for a substantial reduction in the overall carbon footprint of the backfill material.

Clays are abundant materials worldwide. Calcined clay materials are obtained by heat treatment of clays, which contain phyllosilicates, i.e. sheet silicates. Phyllosilicates include 1:1 and/or 2:1 layered (natural) clays or mixtures thereof, comprising di- and/or trioctahedral sheets or mixtures thereof and a layer charge of 0, e.g., kaolinite, up to a negative layer charge of 1, e.g. mica or mixtures thereof. Heat treatment of the clay converts the clay minerals by dehydroxylation with release of water. For example, kaolinite may be heat treated to obtain metakaolin (Al₂Si₂O₇). The obtained calcined clay material is a naturally derived pozzolan. Clays derived from natural deposits to prepare calcined clays can vary in composition and crystalline structure in a broad range. For the purpose of the present invention, a calcined clay is any material prepared by heat treatment of clay that provides a pozzolanic reactivity. As the composition, crystalline structure, fineness and the processing conditions like temperature and time of heat applied can vary significantly, the reactivity of calcined clays consequently can differ significantly as well.

Suitable clay materials have been found to belong to the kaolin group such as kaolinite, dickite, nacrite or halloysite. Acceptable strengths can also be obtained using clays of the smectite group including dioctahedral smectites such as montmorillonite and nontronite and trioctahedral smectites such as saponite, or vermiculite, and mixtures thereof. This opens the possibility of using clays which are much more widely available than kaolin.

These may be medium- or low-grade kaolin clays or non-kaolin clays. The calcined clay material may comprise less than 90 wt.-%, preferably less than 70 wt.-%, for example 30 to 40 wt.-% of calcined clay obtained from kaolin.

In one embodiment, the calcined clay is present in an amount of at least 5 wt.-%, preferably 10 to 80 wt.-%, more preferably 15 to 60 wt.-%, relative to the weight of the binder component.

The slag can be either metallurgical slag, which is the solid waste produced by the metallurgical industry, such as steel slag, blast furnace slag (BFS), ground granulated blast furnace slag (GGBFS), red mud (RM), and copper slag (CS), or else synthetic slag.

Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO.

The natural pozzolans can be tuff, trass or volcanic ash.

According to another embodiment, in addition to the SCM, in particular calcined clay, the binder component additionally comprises at least one of carbonate rock powder and a sulfate source.

A coupled substitution of cement with calcined clay and carbonate rock powder allows still higher levels of substitution. The idea of coupled substitution of cement with calcined clay and carbonate rock powder is based on the observation that cements containing alumina react with carbonate phases to produce carboaluminate phases that are hard and crystalline, and contribute to the development of the microstructure.

Carbonate rock powders consist of finely crushed carbonate rock and are abundantly available. Useful examples include limestone, such as ground limestone or precipitated limestone, dolomite, magnesite, and mixtures thereof. Preferably, the carbonate rock powder is limestone.

To prevent undersulfation and to optimize early-age strength, the sulfate content may need to be adjusted in calcined clay blends. An adequate sulfate content can be obtained by adding a sulfate source to the blends. The sulfate source is a compound capable of providing sulfate ions in an alkaline aqueous environment. Generally, the sulfate source has an aqueous solubility of at least 0.6 mmol·L⁻¹ at a temperature of 30 °C. The aqueous solubility of the sulfate source is suitably determined in water with a starting pH value of 7. The sulfate source may be a calcium sulfate source and the sulfate source is preferably selected from gypsum, hemihydrate, anhydrite and mixtures thereof.

As a further essential ingredient, the backfill material of the invention comprises a dispersant comprising a phosphorylated polycondensate being obtainable by a condensation reaction of
(i) an aromatic compound having a phosphate moiety,
(ii) an alkoxylated hydroxyaryl compound having a polyoxyalkylene chain with 3 to 130 oxyalkylene units, and
(iii) formaldehyde,
in a weight ratio of (i) : (ii) of 2 : 98 to 40 : 60, preferably 5 : 95 to 30 : 70, more preferably 10 : 90 to 20 : 80.

It is known that dispersants are added to aqueous slurries of hydraulic and/or mineral binders for improving their workability. Additives of this kind are able to prevent the agglomeration by dispersing existing particles and those newly formed by hydration, and in this way to improve the workability (fluidity, pumpability, viscosity, self-compacting ability, spray ability, finish ability). In order to reduce the fraction of excess water for a given processing consistency and/or to improve the processing properties for a given water/binder ratio, additives are used which are generally referred to as water-reducing agents or plasticizers. Those which allow high levels of water reduction are known as high range water reducers or superplasticizers.

The aromatic compound having a phosphate moiety (i) may be represented by formula (X-1): 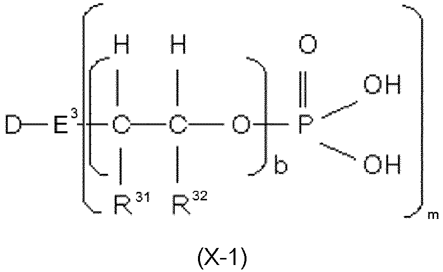 wherein
D is a substituted or unsubstituted aromatic or heteroaromatic compound having 5 to 10 carbon atoms,
E³ is N, NH or O,
m = 2 if E³ = N and m = 1 if E³ = NH or O,
R³¹ and R³², independently of one another, are identical or different and are represented by a branched or straight-chain C₁- to C₁₀-alkyl radical, C₅- to C₈-cycloalkyl radical, aryl radical, heteroaryl radical or H, and
b is identical or different and represented by an integer from 0 to 300.

Suitably, moiety D is represented by phenyl, 2-hydroxyphenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxy¬naphthyl, 4-methoxynaphthyl, preferably phenyl.

Preferably, moiety E³ is represented by O.

Suitably, the substituents R³¹ and R³² may be chosen independently of one another and are preferably represented by H, methyl, ethyl or phenyl, more preferably by H or methyl, most preferably by H.

Suitably, b is an integer from 0 to 10, preferably 1 to 7, more preferably 1 to 5. The respective substituents, the length of which is defined by b, may consist of uniform building blocks, but a mixture of different building blocks may also be expedient. Furthermore, the substituents may each have the same chain length, b being represented by a number. As a rule, however, it will be expedient if mixtures having different chain lengths are present in each case so that the radicals of the monomers or structural units in the polycondensate have different numerical values for b.

The alkoxylated hydroxyaryl compound (ii) is a hydroxyaryl compound having a polyoxyalkylene chain with 3 to 130, preferably 5 to 100, more preferably 8 to 80 oxyalkylene units.

Herein, the term "alkoxylated hydroxyaryl compound" denotes a compound having an aromatic core and at least one hydroxyl group directly attached to the aromatic core. The alkoxylated hydroxyaryl compound (ii) may have one or more further substituents as long as the presence of such substituents does not interfere with the condensation reaction of the alkoxylated hydroxyaryl compound (ii) and formaldehyde (iii). In an embodiment, the hydroxyaryl compound (ii) is selected from unsubstituted or monosubstituted phenols, and unsubstituted or monosubstituted naphthols. Suitably, the phenols and naphthols may be monosubstituted with a substituent selected from alkyl groups and carboxylic groups. Suitable naphthols are selected from 1-naphthol and 2-naphthol. Suitable alkyl-substituted phenols are selected from ortho-cresol, meta-cresol and para-cresol. Suitable carboxylic-substituted phenols are selected from gallic acid and salicylic acid.

Herein, the term "oxyalkylene units" refers to a repeating unit of general formula (A-1):

-[-R-O-]- (A-1)

wherein R denotes a linear or branched alkylene unit having at least 2 carbon atoms, preferably 2 to 4 carbon atoms. The polyoxyalkylene chain may comprise identical or different oxyalkylene units. Different oxyalkylene units may be arranged either in a random or a block-wise fashion. Preferably, the oxyalkylene unit is an oxyethylene group (-CH₂-CH₂-O-) and/or an oxypropylene group (-CH(CH₃)-CH₂-O- and/or -CH₂-CH(CH₃)-O-), preferably an oxyethylene group.

The alkoxylated hydroxyaryl compounds (ii) may be obtained by reaction of hydroxyaryl compounds with alkylene oxides such as ethylene oxide or propylene oxide. The alkylene oxides introduce one or more divalent oxyalkylene groups into the hydroxyaryl compounds, e.g. into the phenol molecule. Such alkylene oxide residue is then interposed between the hydroxyl group oxygen atom and its hydrogen atom.

Generally, such an alkoxylated compound may be a single compound. However, usually, it is a mixture of compounds in which the numbers of oxyalkylene groups in the compounds are present as a distribution. That is that the number of 3 to 130 oxyalkylene units per polyoxyalkylene chain represents an average value of oxyalkylene units per polyoxyalkylene chain.

In an embodiment, the polyoxyalkylene units comprise at least 60 mol-%, preferably at least 85 mol-%, more preferably at least 95 mol-% of oxyethylene units.

In an embodiment, the alkoxylated hydroxyaryl compound (ii) is an ethoxylated phenol. The term "ethoxylated phenol" denotes a hydroxyaryl compound that has been reacted with ethylene oxide to yield a polyoxyalkylene chain consisting of 100% oxyethylene units.

Suitably, such ethoxylated phenol is prepared by an ethoxylation reaction of phenol, or phenoxyethanol using ethylene oxide. Generally, such a phenoxyethanol precursor may be produced by a hydroxyethylation reaction of phenol using ethylene oxide, e.g. by a Williamson ether synthesis. Said phenoxyethanol precursor carries a hydroxyethyl moiety at the phenolic hydroxyl group oxygen atom at which a (poly)-oxyethylene chain may subsequently be attached.

The aromatic compound having a phosphate moiety (i) and the alkoxylated hydroxyaryl compound (ii) are reacted in a weight ratio of (i) : (ii) of 2 : 98 to 40 : 60, preferably 5 : 95 to 30 : 70, more preferably 10 : 90 to 20 : 80.

For the preparation of the phosphorylated polycondensate, components (i) and (ii) are reacted with formaldehyde (iii). Suitably, the formaldehyde (iii) is added in form of paraformaldehyde or an aqueous formaldehyde solution, e.g. having a formaldehyde content of 25% to 37%. Preferably, the formaldehyde (iii) is added in form of a 37% formaldehyde solution in water. Formaldehyde (iii) is present in at least a stoichiometric amount, that is, formaldehyde (iii) is used in a molar amount equal to the sum of the molar amounts of the aromatic compound having a phosphate moiety (i) and the alkoxylated hydroxyaryl compound (ii). Formaldehyde (iii) may be used in excess of the stoichiometric amount.

Suitably, the phosphorylated polycondensate has a weight-average molecular weight of 4000 g/mol to 150000 g/mol, preferably 20000 to 75000 g/mol.

The condensation reaction of the compounds (i), (ii) and (iii) can be carried out according to processes known per se.

The phosphorylated polycondensate ii) may be present as an aqueous solution containing 35 to 75 wt.-% of water and 25 to 65 wt.-% of dissolved dry matter, preferably 40 to 60 wt.-% of water and 40 to 60 wt.-% of dissolved dry matter, more preferably 45 to 55 wt.-% of water and 45 to 55 wt.-% of dissolved dry matter. The dry matter consists essentially of the anhydrous phosphorylated polycondensate.

In an embodiment, the phosphorylated polycondensate has a charge density of 0.5 to 2.7 meq/g, preferably 0.7 to 2.5 meq/g, of polymer. The milliequivalent number refers to carboxyl groups or carboxyl groups releasable from anionogenic groups contained in these components, assuming that all carboxyl groups are in unneutralized form.

The dispersant may additionally comprise a polycarboxylate ether dispersant.

Polycarboxylate ether type superplasticizers (PCEs) based on carboxyl-containing monomers and on polyethylene glycol-containing olefinic monomers are known per se.

The polycarboxylate ether (PCE) is in particular a comb polymer having a carbon-containing backbone to which are attached pendant cement-anchoring groups and polyether side chains, wherein the polyether side chains are preferably linked to the polycarboxylate backbone via ester, ether and/or amide groups. The anionic groups are carboxylic groups and/or carboxylate groups. The PCE is preferably obtainable by radical copolymerization of a polyether macromonomer and a monomer comprising an anionic group. Polycarboxylate ethers are commercially available.

Generally, the polycarboxylate ether incorporates structural units (I) comprising anionic and/or anionogenic groups, and structural units (II) comprising a polyether side chain.

Preferably, the structural unit comprising anionic and/or anionogenic groups is one of the general formulae (Ia), (Ib) and/or (Ic): 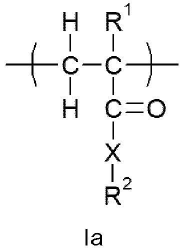 wherein
- R¹: is H, C₁-C₄ alkyl, CH₂COOH, preferably H or methyl;
- X: is a chemical bond;
- R²: isOM; 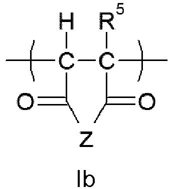
wherein
- R⁵: is H or C₁-C₄ alkyl, preferably H;
- Z: is O; 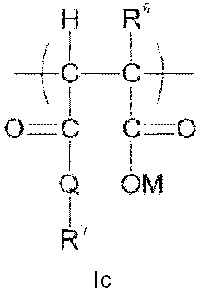
wherein
- R⁶: is H or C₁-C₄ alkyl, preferably H;
- Q: is NR⁷ or O;
- R⁷: is H, M, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂,
- n1: is 1, 2, 3 or 4; and
where each M independently is H or a cation equivalent.

The structural unit of the general formula (Ib) is considered to contain an anionogenic group that undergoes hydrolysis under alkaline conditions giving a structural unit of the formula (Ic) wherein Q is O and R⁷ is H or M.

Preferably, the structural unit comprising a polyether side chain is one of the general formulae (IIa), (IIb), (IIc) and/or (IId): 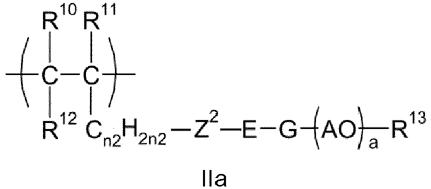 wherein
R¹⁰, R¹¹ and R¹² independently of one another are H or C₁-C₄ alkyl, preferably H or methyl;
Z² is O or S;
E is C₂-C₆ alkylene, cyclohexylene, CH₂-C₆H₁₀, 1,2-phenylene, 1,3-phenylene or 1,4-phenylene;
G is O, NH or CO-NH; or
E and G together are a chemical bond;
A is C₂-C₅ alkylene or CH₂CH(C₆H₅), preferably C₂-C₃ alkylene;
n2 is 0, 1, 2, 3, 4 or 5;
a is an integer from 2 to 350, preferably 10 to 150, more preferably 20 to 100;
R¹³ is H, an unbranched or branched C₁-C₄ alkyl group, CO-NH₂ or COCH₃; 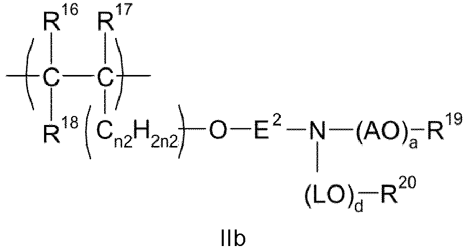
wherein
- R¹⁶, R¹⁷ and R¹⁸: independently of one another are H or C₁-C₄ alkyl, preferably H;
- E²: is C₂-C₆ alkylene, cyclohexylene, CH₂-C₆H₁₀, 1,2-phenylene, 1,3-phenylene, or 1,4-phenylene, or is a chemical bond;
- A: is C₂-C₅ alkylene or CH₂CH(C₆H₅), preferably C₂-C₃ alkylene;
- n2: is 0, 1, 2, 3, 4 or 5;
- L: is C₂-C₅ alkylene or CH₂CH(C₆H₅), preferably C₂-C₃ alkylene;
- a: is an integer from 2 to 350, preferably 10 to 150, more preferably 20 to 100;
- d: is an integer from 1 to 350, preferably 10 to 150, more preferably 20 to 100;
- R¹⁹: is H or C₁-C₄ alkyl; and
- R²⁰: is H or C₁-C₄ alkyl; 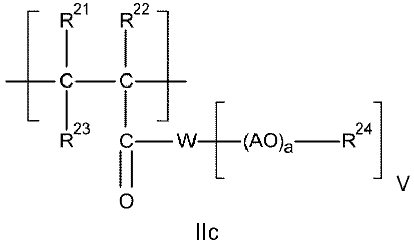
wherein
R²¹, R²² and R²³ independently are H or C₁-C₄ alkyl, preferably H;
W is O, NR²⁵, or is N;
V is 1 if W = O or NR²⁵, and is 2 if W = N;
A is C₂-C₅ alkylene or CH₂CH(C₆H₅), preferably C₂-C₃ alkylene;
a is an integer from 2 to 350, preferably 10 to 150, more preferably 20 to 100;
R²⁴ is H or C₁-C₄ alkyl;
R²⁵ is H or C₁-C₄ alkyl; 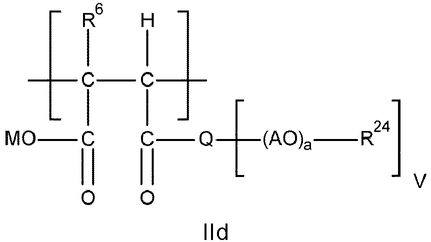
wherein
- R⁶: is H or C₁-C₄ alkyl, preferably H;
- Q: is NR¹⁰, N or O;
- V: is 1 if Q = O or NR¹⁰ and is 2 if Q = N;
- R¹⁰: is H or C₁-C₄ alkyl;
- A: is C₂-C₅ alkylene or CH₂CH(C₆H₅), preferably C₂-C₃ alkylene; and
- a: is an integer from 2 to 350, preferably 10 to 150, more preferably 20 to 100;
where each M independently is H or a cation equivalent.

The molar ratio of structural units (I) to structural units (II) varies from 1:3 to about 10:1, preferably 1:1 to 10:1, more preferably 3:1 to 6:1. The polymeric dispersants comprising structural units (I) and (II) can be prepared by conventional methods, for example by free radical polymerization or controlled radical polymerization. The preparation of the dispersants is, for example, described in EP 0 894 811, EP 1 851 256, EP 2 463 314, and EP 0 753 488.

A polymer can be characterized by its charge density. The charge density refers to the percentage of the monomers which contain charged functional groups. The charge density can affect the solubility, conformation, and electrostatic interaction, and itself is sensitive to pH.

In one embodiment, the polycarboxylate ether dispersant has a charge density of at least 0.1 meq/g, preferably 0.5 to 8 meq/g.

In a preferred embodiment, the dispersant is present in an amount of 0.05 to 15 wt.-%, more preferably 0.1 to 10 wt.-%, relative to the weight of a) and b).

In an embodiment, the dispersant additionally comprises an amine. Hence, the dispersant may comprise a combination of a phosphorylated polycondensate with an amine, or a ternary combination of a phosphorylated polycondensate, a polycarboxylate ether and an amine. The amine may be any amine which is commonly used in construction compositions. Preferably, the amine is an alkanolamine.

The alkanolamine may be selected from diethanolamine (DEA), triethanolamine (TEA), diisopropanolamine (DIPA), triisopropanolamine (TIPA), N,N,N',N'-tetrakis(2-hydroxyethyl)ethylenediamine (THEED), methyl diethanolamine (MDEA), and mixtures thereof, preferably triethanolamine (TEA).

Water within the context of the present invention refers to any water present in the backfill material regardless of its origin. The water in a backfill material of the present invention may originate from the cement, the tailings, the water present where aqueous solutions or dispersions of the dispersant are used, and/or any extra water added in addition. The term "extra water" relates to water added as such. In other words, "extra water" is water not present in the cement, the tailings, the water present where aqueous solutions or dispersions of the dispersant are used.

If additional water is added, such water can be any water available such as distilled water, purified water, tap water, mineral water, spring water, well water, salt water, wastewater, and ground water. The use of wastewater is possible only in cases where the composition of such wastewater is known and where none of the impurities contained may impart the functionality of any other component of the composition of the present invention. The use of salt water is only possible where the risk of corrosion of steel elements is low. It is especially preferred within the present context to use water extracted from the underground operation, for example water pumped out from a mining operation. Preferably, the water extracted from underground operations is filtered before use to remove tailings.

In one preferred embodiment, the weight ratio of water to binder component is higher than 1, preferably 2 to 30, more preferably 3 to 25.

The invention also relates to a method for backfilling, comprising pumping or gravity delivering backfill material according to any of the preferred embodiments, filling the backfill material in excavations in underground operations or surface operations and allowing the backfill slurry to set.

A method is preferred wherein the tailings are derived from underground operations or from tailing ponds or surface ponds.

The invention preferably relates to a method for backfilling, wherein the tailings are derived from the crushing and mineral processing of the ore.

The invention will further be described by way of the appended drawings and examples that follow.

### Figures

Fig. 1 depicts the particle size distribution of the tailings used in the examples.
Fig. 2 depicts yield stress and compressive strength of the inventive backfill material vs. reference backfill materials.
Fig. 3 depicts yield stress and compressive strength of the inventive backfill material comprising various inventive dispersant combinations.
Fig. 4 depicts yield stress and compressive strength of the inventive backfill material vs. reference backfill materials.
Fig. 5 depicts yield stress and compressive strength of inventive backfill materials comprising different phosphorylated polycondensate dispersants.

### Examples

### Materials and methods

Tailings were received in dried form and used without further treatment. Characterization was carried out by means of density, laser granulometry and XRF.

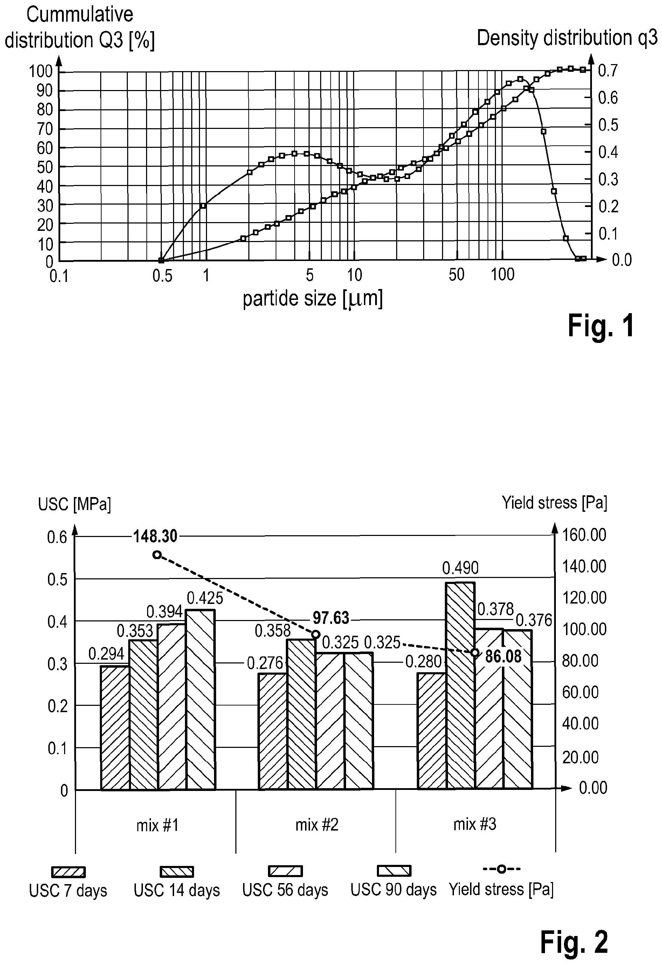

Tailings from Chelopech mine in Bulgaria: The particle size distribution of the tailings is shown in Fig. 1. At least 90 wt.-% of the tailings have a particle size of less than 149.97 µm, and at least 50 wt.-% of the tailings have a particle size of less than 24.89 µm.

Tailings from Cu mine in Australia: Composition and solid state chemistry as shown in below tables 1 and 2, respectively. The tailings have a specific surface by BET of 0.545 m²/g, a loss of ignition at 1050 °C of 8.65 wt.-% and a loss of drying at 120 °C of 0.23 wt.-%. At least 90 wt.- % of the tailings have a particle size of less than 346.47 µm, and at least 50 wt.-% of the tailings have a particle size of less than 119.61 µm.

**Table 1.**

| phase | amount [wt.-%] |
|---|---|
| C2S (Belite) | 0 |
| CaSO₄ · 2 H₂O | 1.0 |
| CaCO₃ (Calcite) | 1.5 |
| CaMg(CO₃)₂ (Dolomite) | 11.4 |
| FeCO₃ (Siderite) | 1.7 |
| Ca₂MgSi₂O₇ (Akermanite) | 0 |
| Ca₃Mg(SiO₄)₂ (Merwinite) | 0 |
| Forsterite/Fayalite | 0 |
| clino pyroxene | 0 |
| FeO (Wuestite) | 0 |
| Fe₃O₄ (Magnetite) | 0 |
| Maghemite | 0 |
| Feldspar | 16.5 |
| Sulfides | 6.0 |
| Mica (including Clinochlore) | 19.0 |
| other minerals | 0.5 |
| SiO₂ (Quartz) | 41.9 |

**Table 2.**

| | amount [wt.-%] |
|---|---|
| Sulfate SO₃ | 2.51 |
| Calcium CaO | 5.35 |
| Potassium K₂O | 2.14 |
| Sodium Na₂O | 1.02 |
| Silicon SiO₂ | 54.51 |
| Iron Fe₂O₃ | 12.02 |
| Aluminum Al₂O₃ | 7.05 |
| Magnesium MgO | 4.49 |
| Manganese Mn₃O₄ | 2580 |
| Chromium Cr₂O₃ | 53 |
| Titanium TiO₂ | 2495 |
| Tin Sn | 0 |
| Chlorine Cl | 88 |
| Phosphorus P₂O₅ | 1372 |
| Strontium SrO | 34 |
| Zinc ZnO | 8941 |
| Zirconium ZrO₂ | 149 |
| Barium Ba | 544 |
| Cobalt Co | 84 |
| Copper Cu | 703 |
| Nickel Ni | 76 |
| Antimony Sb | 0 |
| Vanadium V | 44 |
| Wolfram W | 13 |

The process water was analyzed with respect to pH as well as to its content of cations and anions by Ion Chromatography. Results are as shown in table 3.

**Table 3.**

| K+ [%] | Na+ [%] | Ca²⁺ [%] | Mg2+ [%] | Cl- [%] | SO₄²- [%] | pH | Hardness/rating |
|---|---|---|---|---|---|---|---|
| 0.01 | 0.04 | 0.04 | 0.01 | 0.00529 | 0.249 | 3.0 | 128.5 °F / very hard |

PCE1 (solids content 53%): copolymerization product made from the monomers ethoxylated hydroxybutyl vinyl ether with a molecular weight of 1000 g/mol, ethoxylated hydroxybutyl vinyl ether with a molecular weight of 3000 g/mol and maleic acid
PAE1 (solids content 32%): condensation product made from the monomers phenoxyethanol phosphate, formaldehyde and ethoxylated phenoxyethanol with a molecular weight of 750 g/mol
PAE2 (solids content 48%): condensation product made from the monomers phenoxyethanol phosphate, phenoxyethanol, formaldehyde and ethoxylated phenoxyethanol with a molecular weight of 1500 g/mol
PAE3 (solids content 33%): condensation product made from the monomers phenoxyethanol phosphate, formaldehyde and ethoxylated phenoxyethanol with a molecular weight of 4500 g/mol

### Unconfined Compressive Strength (UCS)

The UCS was measured on a Zwick Roell Allround Line Z150 with a Xforce K 150kN force cell. Prior to a UCS test, the sizes of a sample are rectified to obtain valid press surfaces.

### Yield Point

The yield point of the fresh backfill material was measured using a constant shear rate method (at 0.5 RPM) using a HAAKE viscotester iQ rheometer (available from Anton Paar) and measuring geometry with VANE (FL100).

### Backfill testing

Different reference backfill materials and inventive backfill materials were prepared and investigated for their compressive strength development and yield point. Each of the backfill material was prepared by mixing the dispersant, if present, with the mixing water. The dry solids in form of the tailings from a Cu mines and the binder component were mixed with the prepared water-dispersant-mixture, or with the mixing water in the absence of dispersant. The backfill material was casted using an IKA mixer (mixing time 30s, 30s rest, then 1 minute) in 20 mm x 20 mm x 20 mm cubes. The backfill samples were stored in a climate chamber at a temperature of 30 °C and a relative humidity of 80%.

### Example 1

In this example, tailings from Chelopech mine in Bulgaria were used. The mix designs of the tested backfill materials are summarized in table 4. The cement used was CEM I.

**Table 4.**

| mix # | tailings [%] | cement [%] | water [%] | dispersant | dispersant [mL/t of backfill mix] |
|---|---|---|---|---|---|
| 1* | 72 | 4.5 | 23.5 | - | 0 |
| 2* | 72 | 4.5 | 23.5 | PCE1 | 250 |
| 3 | 72 | 4.5 | 23.5 | PAE86 | 250 |
| 4 | 72 | 4.5 | 23.5 | PCE1 (30%) | 150 |
| | | | | PAE1 (60%) | |
| | | | | TEA (10%) | |
| 5 | 72 | 4.5 | 23.5 | PCE1 (30%) | 200 |
| | | | | PAE1 (60%) | |
| | | | | TEA (10%) | |
| 6 | 72 | 4.5 | 23.5 | PCE1 (30%) | 250 |
| | | | | PAE1 (60%) | |
| | | | | TEA (10%) | |
| 7 | 72 | 4.5 | 23.5 | PCE1 (30%) | 300 |
| | | | | PAE1 (60%) | |
| | | | | TEA (10%) | |

| | | | | | |
|---|---|---|---|---|---|
| * comparative example | | | | | |

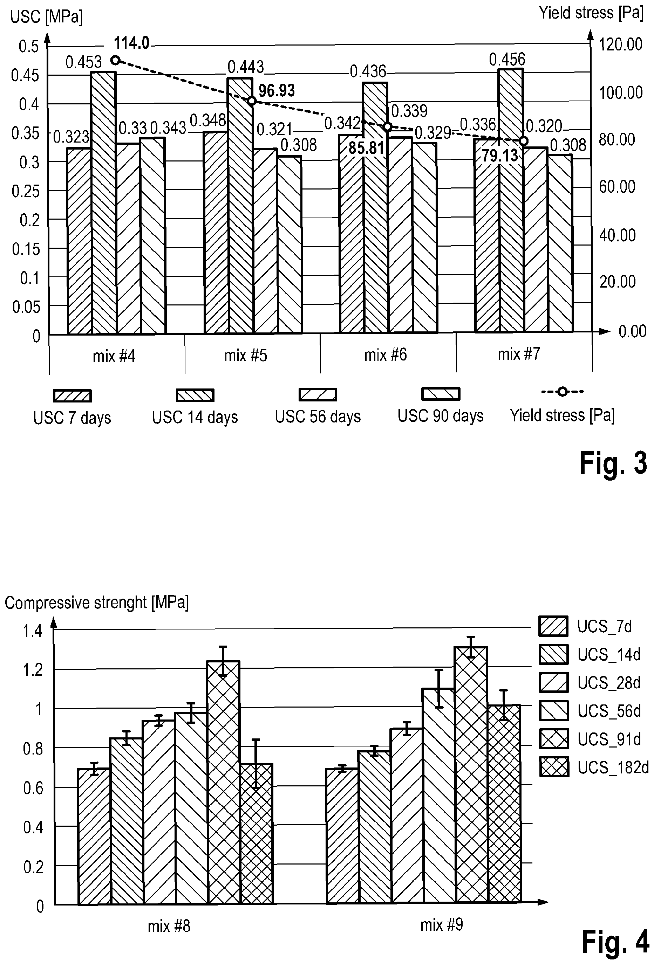

It can be seen from Fig. 2 and Fig. 3 that the inventive backfill materials had lower yield points compared to the reference backfill materials containing no dispersant or a polycarboxylate ether dispersant.

Inventive backfill material #3 of Fig. 2 had a higher long term Unconfined Compressive Strength (after 90 d) in comparison to backfill material #2 of Fig. 2 comprising a polycarboxylate ether dispersant only.

Backfill mixtures 4 to 7 (see Fig. 3) comprising a dispersant mixture of a phosphorylated polycondensate and a polycarboxylate ether and triethanolamine were advantageous both in view of yield point and long term Unconfined Compressive Strength.

### Example 2

In this example, tailings from Cu mine in Australia were used. The mix designs of the tested backfill materials are summarized in table 5. The cement used was CEM I.

**Table 5.**

| mix # | tailings [%] | cement [%] | water [%] | dispersant | dispersant [mL/t of backfill mix] |
|---|---|---|---|---|---|
| 8* | 73 | 5 | 22 | - | 0 |
| 9 | 73 | 5 | 22 | PAE1 | 500 |
| 10* | 73 | 5 | 22 | - | 0 |
| 11 | 73 | 5 | 22 | PAE2 | 500 |
| 12 | 73 | 5 | 22 | PAE3 | 500 |

Inventive backfill material 9 of Fig. 4 comprising a phosphorylated polycondensate dispersant had a significantly improved long term Unconfined Compressive Strength (after 182 d) in comparison to reference backfill material 8 without dispersant. In inventive backfill material 9, the drop in Unconfined Compressive Strength from 91 d to 182 d is less pronounced than in reference backfill material 8.

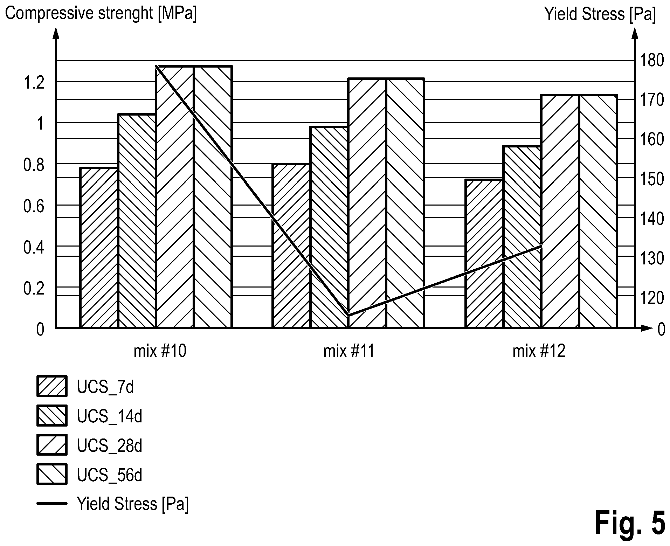

Fig. 5 provides two inventive backfill materials 11 and 12 comprising different phosphorylated polycondensate dispersants. The inventive backfill materials 11 and 12 had lower yield points compared to the reference backfill material 10 without dispersant.

## Claims

1. A backfill material comprising
a. tailings,
b. a binder component,
c. water, and
d. a dispersant comprising a phosphorylated polycondensate being obtainable by a condensation reaction of
(i) an aromatic compound having a phosphate moiety,
(ii) an alkoxylated hydroxyaryl compound having a polyoxyalkylene chain with 3 to 130 oxyalkylene units, and
(iii) formaldehyde,
in a weight ratio of (i) : (ii) of 2 : 98 to 40 : 60, preferably 5 : 95 to 30 : 70, more preferably 10 : 90 to 20 : 80.

2. The backfill material according to claim 1, wherein the binder component comprises a Portland cement clinker-based binder.

3. The backfill material according to claim 1 or 2, wherein the binder component comprises a supplementary cementitious material, wherein the supplementary cementitious material is preferably selected from calcined clay, slag, fly ash, natural pozzolans and combinations thereof.

4. The backfill material according to any one of the preceding claims, wherein the binder component additionally comprises at least one of carbonate rock powder and a sulfate source.

5. The backfill material according to claim 4, wherein the carbonate rock powder is limestone and the sulfate source is selected from gypsum, hemihydrate, anhydrite and mixtures thereof.

6. The backfill material according to any one of the preceding claims, wherein the hydroxyaryl compound is selected from phenols and naphthols.

7. The backfill material according to any one of the preceding claims, wherein the phosphorylated polycondensate has a charge density of 0.5 to 2.7 meq/g, preferably 0.7 to 2.5 meq/g.

8. The backfill material according to any one of the preceding claims, wherein the dispersant additionally comprises a polycarboxylate ether dispersant.

9. The backfill material according to claim 8, wherein the polycarboxylate ether dispersant has a charge density of at least 0.1 meq/g, preferably 0.5 to 8 meq/g.

10. The backfill material according to any one of the preceding claims, wherein the dispersant additionally comprises an amine, preferably an alkanolamine.

11. The backfill material according to any of the preceding claims, wherein the weight ratio of the binder component to the tailings is from 1 to 20, preferably 1.5 to 15, more preferably 2 to 10.

12. The backfill material according to any of the preceding claims, wherein the weight ratio of water to binder component is higher than 1, preferably 2 to 30, more preferably 3 to 25.

13. The backfill material according to any of the preceding claims, wherein the dispersant is present in an amount of 0.05 to 15 wt.-%, preferably 0.1 to 10 wt.-%, relative to the weight of a) and b).

14. The backfill material according to any of the preceding claims, which has a yield point of 1000 Pa or lower, as measured by constant shear rate method (at 0.5 RPM) using a HAAKE viscotester iQ rheometer and measuring geometry with VANE (FL100).

15. A method for backfilling, comprising pumping or gravity delivering backfill material according to any one of the preceding claims, filling the backfill material in excavations in underground operations or surface operations and allowing the backfill material to set.

16. A method for backfilling according to claim 15, wherein the tailings are derived from underground operations or from surface ponds.

17. A method for backfilling according to claim 15 or 16, wherein the tailings are derived from the crushing and mineral processing of ore.
